# EUROPÄISCHE PATENTSCHRIFT

(11) **EP 2 555 074 B1**
(45) Veröffentlichungstag und Bekanntmachung des Hinweises auf die Patenterteilung: **08.10.2014**
(21) Anmeldenummer: 12401163.6
(22) Anmeldetag: 27.07.2012
(51) Int. Cl.: G05D 23/30, F24D 19/10, G05D 23/19, G05D 23/32

(54) **Verfahren zum bedarfsabhängigen Regeln einer Heiz- und/oder Kühlanlage für ein wenigstens eine Nutzungseinheit umfassendes Objekt**
Method for controlling a heating and/or cooling assembly according to requirements for an object comprising at least one usage unit
Procédé de réglage en fonction du besoin d'une installation de refroidissement et/ou de chauffage pour un objet comprenant au moins une unité d'utilisation

(30) Priorität: 01.08.2011 DE 102011052340
(43) Veröffentlichungstag der Anmeldung: 06.02.2013
(73) Patentinhaber: KERMI GmbH, 94447 Plattling (DE)
(72) Erfinder: Fonfara, Harald, 94551 Lalling (DE); Künkler, Thomas, 94428 Eichendorf (DE)
(74) Vertreter: Eder, Thomas

(56) Entgegenhaltungen:
- DE-A1- 3 045 753

## Beschreibung

Die Erfindung bezieht sich auf ein Verfahren zur bedarfsabhängigen Regelung einer Heiz- und/oder Kühlanlage für ein wenigstens eine Nutzungseinheit umfassendes Objekt.

Derartige Verfahren und Vorrichtungen finden insbesondere bei Objekten wie Gebäuden und Wohnungen Anwendung, um als Nutzungseinheiten eines Objekts, beispielsweise einzelne Räume, zu heizen oder zu kühlen.

Bei älteren Anlagen ist jedoch oft keine Regelung der zentral zur Verfügung gestellten Heiz- oder Kühlleistung vorgesehen, so dass mit einer festen Vorlauftemperatur oder allenfalls einer nach einer fest vordefinierten Charakteristik verlaufenden Vorlauftemperatur bzw. Heiz- oder Kühlleistung gearbeitet wird. So existiert am Markt eine Vielzahl von Warmwasser-Heizungsanlagen mittleren Alters, die sich verbrennungstechnisch auf einem relativ hohen Niveau befinden. Die für die Beheizung des Gebäudes erforderliche Vorlauftemperatur des Heizwassers wird hierbei vom Wärmeerzeuger nach einer fest eingestellten Heizkurve bereitgestellt. Am weitesten verbreitet ist bei derartigen am Markt befindlichen Anlagen die sogenannte außentemperaturabhängige Anpassung der Vorlauftemperatur bzw. gleitende Vorlauftemperatur.

Bei entsprechenden individuellen Bedarfswerten in den jeweiligen Nutzungseinheiten ist eine derartige Regelung bzw. Steuerung des Momentan-Bedarfs jedoch energetisch nicht optimal. Trotz des hohen technischen Niveaus der Wärmeerzeugung sind die meisten dieser Anlagen aber für energetisch effizientere Regelverfahren, wie zum Beispiel die Anpassung der Vorlauftemperatur an den tatsächlichen momentanen Bedarf (an Heizleistung) des Gebäudes, nicht geeignet.

In der DE 3045753 A1 wurde daher eine Einrichtung zur zentralen Steuerung vorgeschlagen, welche jeweils ein Heizelement für die in den einzelnen Räumen vorhandenen Raumthermostate vorsieht, welches individuell von einer Steuerzentrale ansteuerbar ist.

Eine nachträgliche Ausstattung vorgenannter Anlagen mit einer hierfür geeigneten Regelung ist jedoch mit einem unverhältnismäßig hohem Aufwand an Arbeit, Material, Zeit und Kosten verbunden. Besonders aufwendig und kostenintensiv ist der hierfür notwendige Austausch der vorhandenen zentralen Regelung bzw. Steuerung der Heizungsanlage durch eine Regelung mit einem (separaten) Interface, da bei vorgenannten älteren Anlagen kein entsprechender Steuereingang zur Regelung der Heizleistung vorhanden ist. Zudem sind Interface-fähige Raumregler zu installieren und mit der zentralen Regelung zu verbinden.

Die große Vielfalt der im Markt befindlichen zentralen Regelungen verhindert jedoch, dass Ersatzregelungen mit den zusätzlichen Funktionen in großen Stückzahlen zu vertretbaren Preisen herstellbar sind. Da für sanierungswillige Betreiber aber das Gebot der Wirtschaftlichkeit einer Sanierungsmaßnahme gilt, bleibt ein mögliches Energieeinsparpotenzial unerschlossen.

Der vorliegenden Erfindung liegt daher die Aufgabe zugrunde, bestehende Verfahren zu verbessern und den Energieverbrauch bestehender Anlagen auf einfache und kostengünstige Art und Weise zu senken.

Diese Aufgabe wird erfindungsgemäß durch ein Verfahren mit den Merkmalen des Anspruchs 1, sowie durch Einrichtung mit den Merkmalen des Anspruchs 5 gelöst.

In bestehenden Anlagen eingangs genannter Bauart ist regelmäßig ein zentraler Temperatursensor für die Außen- oder Umgebungstemperatur in Form eines Außenfühlers vorgesehen. Durch diesen Außenfühler wird nach dem darin verbauten Thermoelement und dessen besondere Temperaturcharakteristik, meist Widerstandscharakteristik, Einfluss genommen auf die hiermit verbundene zentrale Steuerung der Heiz- oder Kühlanlage.

Erfindungsgemäß wird statt einem aufwendigen Eingriff in ein bestehendes System das Vorhandensein eines zentralen Temperatursensors für die Außen- oder Umgebungstemperatur ausgenutzt, um eine dem Momentan-Bedarf entsprechende bedarfsabhängige Regelung bzw. Steuerung der Heiz- oder Kühlleistung zu ermöglichen. Hierzu wird der Momentan-Bedarf ermittelt, beispielsweise über Werte eines oder mehrerer Thermostaten in den Nutzungseinheiten oder der Stellglieder für die Heiz- oder Kühlelemente. Selbstverständlich ist es aber auch denkbar den Momentan-Bedarf für eine aktuell benötigte Heiz- oder Kühlleistung aus anderen Werten, beispielsweise der Rücklauftemperatur und eventuell der Differenz zur Vorlauftemperatur, einer Anlage zu ermitteln.

Unterscheidet sich der Momentan-Bedarf von der tatsächlichen Ist-Heiz- oder Kühlleistung, so wird über eine Steuereinheit auf eine Offset-Einrichtung entsprechend auf den Außenfühler, wie nachfolgend beschrieben, Einfluss genommen, um diesen zu beheizen oder zu kühlen. Hierdurch wir ein gewünschter Offset, also eine gewünschte Abweichung von einem Ist-Wert, bzw. einem Ist-Bereich oder einer Ist-Kurve eingebracht.

Hierzu kann ein bestehender Außenfühler gegen einen neuen Außenfühler mit einer derartigen Offset-Einrichtung getauscht werden. Selbstverständlich ist es aber auch denkbar an oder in einem bestehenden Außenfühler in der Nähe des Thermoelements eine derartige Offset-Einrichtung nachträglich anzubringen. Hierdurch kann vorteilhafterweise nicht nur ein bestehender Außenfühler weiterverwendet werden, sondern auch die Charakteristik des bestehenden Außenfühlers und deren Abstimmung (voreingestellte Heiz- oder Kühlkurve) auf die vorhandene zentrale Steuerung unverändert übernommen werden.

In bevorzugter Ausgestaltung der Erfindung werden aktuelle Werte oder gesamte zeitliche Abläufe von einem oder mehreren Thermostaten der jeweiligen Nutzungseinheiten, insbesondere der Raumthermostate, an die Auswerteeinheit über eine Kommunikationsstrecke zur Ermittlung des Momentan-Bedarfs übermittelt und die Offset-Einrichtung über eine Steuereinheit entsprechend gesteuert bzw. geregelt. Hierzu kann in besonders vorteilhafter Ausgestaltung der Erfindung eine bestehende Verbindung, wie beispielsweise das Objektstromnetz oder drahtlose Verbindungen, verwendet werden, um über geeignete Verfahren, wie Modulation, Multiplex, etc. Signale der Thermostaten an die Auswerteeinheit zu übertragen.

In weiterer Ausgestaltung der Erfindung wird als Offset-Einrichtung ein Peltier-Element verwendet. Hiermit ist es auf kostengünstige Weise möglich, einen Außenfühler bzw. dessen Thermoelement nicht nur zu kühlen sondern auch, beispielsweise durch Umkehrung der Stromrichtung oder durch Ansprechen eines anderen Teils des Peltier-Elements oder eines weiteren Peltier-Elements, deren Flächen umgekehrt angeordnet sind, zu beheizen.

Nachfolgend wird das erfindungsgemäße Verfahren eines bedarfsabhängigen Regelkreises, bei dem aus einem Objekt, wie beispielsweise einem Gebäude oder einer Wohnung, bei welchem der Momentan-Heiz- oder -Kühlbedarf, beispielsweise mittels hierfür geeigneter Erfassungseinrichtungen in einem oder mehreren Räumen als Nutzungseinheiten, erfasst wird, erläutert.

Weicht der Momentan-Bedarf von der in der zentralen Regelung des Wärme- oder Kälteerzeugers voreingestellten Heiz- oder Kühlkurve ab, wird von einer Steuereinrichtung eine in oder an der Gehäusewandung eines Außenfühlers des Wärme- oder Kälteerzeugers angeordnete Offset-Einrichtung, beispielsweise in Form eines Peltier-Elements, wie folgt aktiviert:

Im Heizfalle, wenn für das Gebäude von den Raumerfassungseinrichtungen ein niedrigerer Bedarf an Heizwärme bzw. Heizenergie detektiert wird, wird das Peltier-Element in einer Weise mit Strom bzw. elektrischer Energie versorgt, dass die dem Thermoelement zugewandte Seite, insbesondere die innerhalb des Gehäuses des Außenfühlers befindliche Seite, warm wird und den Außenfühler je nach Abweichung zwischen Wärmebedarf und Wärmeangebot eine höhere Außentemperatur fühlen lässt, als tatsächlich herrscht und somit die Vorlauftemperatur und damit gleichbedeutend das Wärmeangebot verringert und an den tatsächlichen Wärmebedarf anpasst.

Analog dazu im Heizfalle, wenn für das Gebäude von den Raumerfassungseinrichtungen ein höherer Bedarf an Heizwärme detektiert wird, wird das Peltier-Element in einer Weise mit elektrischer Energie versorgt, dass die dem Thermoelement zugewandte Seite, insbesondere die innerhalb des Gehäuses des Außenfühlers befindliche Seite kalt wird und den Außenfühler je nach Abweichung zwischen Wärmebedarf und Wärmeangebot eine niedrigere Außentemperatur fühlen lässt, als tatsächlich herrscht und somit die Vorlauftemperatur und damit gleichbedeutend das Wärmeangebot erhöht und an den tatsächlichen Wärmebedarf anpasst.

Im Kühlfalle, wenn für das Gebäude von den Raumerfassungseinrichtungen ein niedrigerer Bedarf an Kühlenergie detektiert wird, wird das Peltier-Element in einer Weise mit Strom bzw. elektrischer Energie versorgt, dass die dem Thermoelement zugewandte Seite, insbesondere die innerhalb des Gehäuses des Außenfühlers befindliche Seite, kalt wird und den Außenfühler, je nach Abweichung zwischen Bedarf an Kühlenergie und Angebot an Kühlenergie, eine niedrigere Außentemperatur fühlen lässt, als tatsächlich herrscht und somit die Vorlauftemperatur erhöht und damit gleichbedeutend das Kühlungsangebot verringert und an den tatsächlichen Kühlungsbedarf anpasst.

Im Kühlfalle, wenn für das Gebäude von den Raumerfassungseinrichtungen ein höherer Bedarf an Kühlenergie detektiert wird, wird das Peltier-Element in einer Weise mit Strom bzw. elektrischer Energie versorgt, dass die dem Thermoelement zugewandte Seite, insbesondere die innerhalb des Gehäuses des Außenfühlers befindliche Seite, erwärmt wird und den Außenfühler je nach Abweichung zwischen Bedarf an Kühlenergie und Angebot an Kühlenergie eine höhere Außentemperatur fühlen lässt, als tatsächlich herrscht und somit die Vorlauftemperatur verringert und damit gleichbedeutend das Kühlungsangebot erhöht und an den tatsächlichen Kühlungsbedarf anpasst.

In bevorzugter Ausgestaltung der Erfindung umfasst eine Anlage bzw. ein System zur Umsetzung des vorstehend beschriebenen Verfahrens mindestens eine Erfassungseinrichtung für den tatsächlichen Heiz- oder Kühlbedarf bzw. Momentan-Bedarf des Objekts, beispielsweise wenigstens eine Raumtemperaturerfassungseinrichtung zur Erfassung des tatsächlichen Raumheiz- oder -Kühlbedarfs beispielsweise aus dem Vergleich zwischen Soll- und Ist-Temperatur. Weiterhin umfasst sie eine Auswerteeinrichtung bzw. -einheit, die aus einem ermittelten Momentan-Bedarf, beispielsweise der Differenz zwischen Soll- und Ist-Bedarf, insbesondere Soll- und Ist-Temperatur des Raumes bzw. mehrerer Räume oder auch Teilräume, ein Stellsignal zur Korrektur der am Wärmeerzeuger voreingestellten Heiz- oder Kühlkurve (im Falle einer Abweichung hiervon) erzeugt. Als Außenfühler mit einer Offset-Einrichtung, umfasst sie vorzugsweise ein Gehäuse für den vorhandenen Außenfühler des Wärme- oder Kälteerzeugers mit einem Peltier-Element in der Gehäusewand (kann beispielsweise über den vorhandenen Außenfühler gestülpt bzw. geschoben werden).

Zudem umfasst eine derartige Anlage vorzugsweise eine Elektro-Versorgungsleitung zwischen der Auswerteeinheit und dem Peltier-Element und eine Kommunikationsstrecke zwischen der mindestens einen Raumtemperaturfassungseinrichtung und der Auswerteeinheit. Selbstverständlich ist es aber auch denkbar, dass die Auswerteeinheit in der Nähe oder an der Raumtemperaturerfassung bzw. Bedarfserfassungseinrichtung angeordnet ist, beispielsweise an einem Raumthermostat oder an einer Erfassungseinheit für die Rücklauftemperatur an der zentralen Steuerung, so dass eine Kommunikationsstrecke dazwischen entfallen kann. Zudem kann die Offset-Einrichtung die Versorgungsenergie autark oder von einem anderen Ort, insbesondere von der Außenfühlerenergieversorgung beziehen, so dass zwischen Steuereinheit und Offset-Einrichtung nur eine Kommunikationsstrecke für ein Steuersignal vorhanden ist. Selbstverständlich ist es auch denkbar, dass die Auswerte- und/oder Steuereinheit in der Nähe oder an der Offset-Einrichtung angeordnet ist, so dass eine Kommunikationsstrecke dazwischen entfällt.

Weitere vorteilhafte Ausgestaltungen der Erfindung ergeben sich aus den abhängigen Ansprüchen.

Die Erfindung wird nachfolgend anhand eines in der Zeichnung dargestellten Ausführungsbeispiels näher erläutert.

In der Zeichnung zeigen:
- Fig. 1: eine schematische Darstellung eines erfindungsgemäßen Heiz- und/oder Kühlkreises mit einem Außenfühler und
- Fig. 2: eine schematische Einzeldarstellung eines Außenfühlers mit einer Offset-Einrichtung nach Fig. 1.

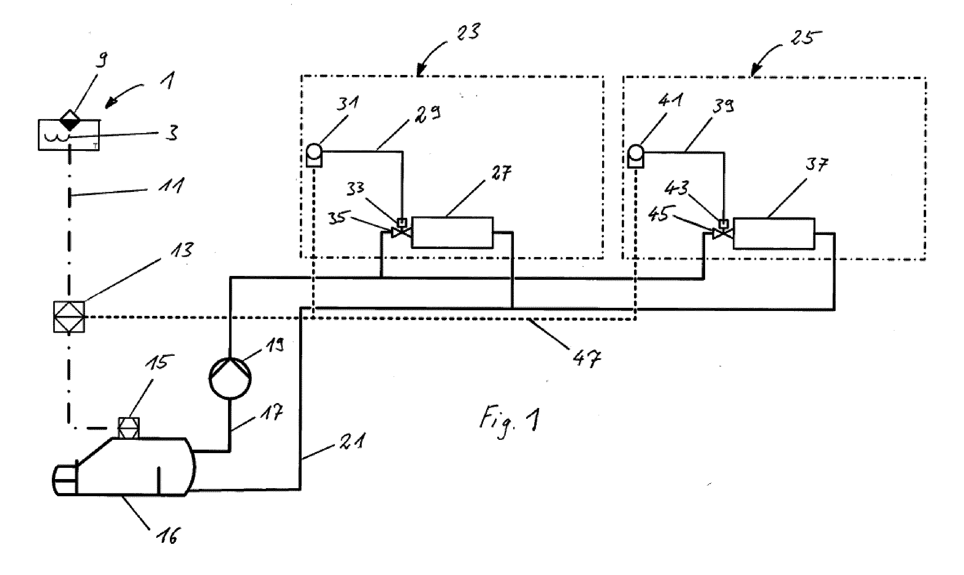

Wie aus Fig. 1 ersichtlich, weist ein erfindungsgemäßer aufgerüsteter bzw. nachgerüsteter Regelkreis eines bestehenden Heiz- oder Kühlsystems für ein aus einer oder mehreren Nutzungseinheiten, insbesondere Räume 23 und 25 bestehendes Objekt einen Außenfühler 1 auf, welcher neben einem Thermoelement bzw. Thermosensor 3 eine Offseteinrichtung 9 beispielsweise in Form eines Peltier-Elements besitzt.

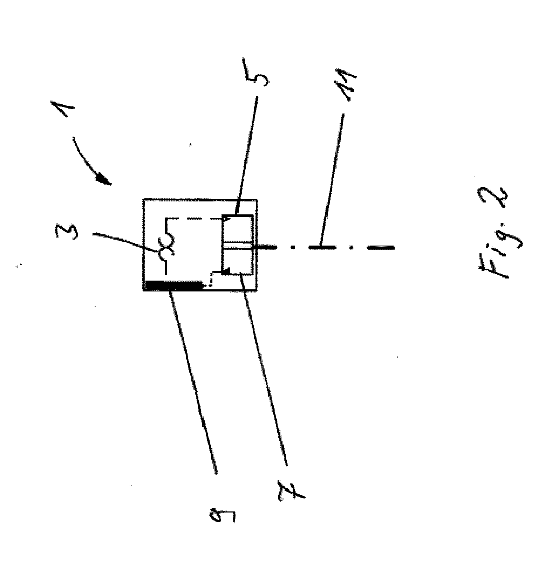

Wie aus Fig. 1 und Fig. 2 ersichtlich, ist das Peltier-Element 9 vorzugsweise in oder am Gehäuse des Außenfühlers in der Nähe des Thermoelements 3 angeordnet, so dass das Thermoelement 3 mittels einer dem Thermoelement 3 zugewandten Seite bzw. Fläche des Peltier-Elements 9 erwärmt oder gekühlt werden kann. Die andere Fläche bzw. Seite des Peltier-Elements 9 befindet sich dagegen an oder in der Außenwandung des Gehäuses, so dass über das Gehäuse oder direkt über die Außenfläche die an dieser Fläche entstehende gegensätzliche Wärme oder Kälte zur innen liegenden Fläche an die Umgebung abgegeben werden kann.

Im Gehäuse befinden sich weiter eine Erfassungseinheit 5 bzw. Elektronik für das Thermoelement 3, um das Thermoelement 3 entsprechend zu speisen und ein erfasstes Signal über eine Verbindungsleitung 11 mit einer zentralen Steuereinheit einer bestehenden aufzurüstenden Heiz- oder Kühlanlage 15 zu verbinden.

Weiterhin weist der Außenfühler 1, wie aus Fig. 2 ersichtlich, in seinem Gehäuseinneren eine Steuereinheit bzw. Elektronik 7 für das Peltier-Element 9 auf, mittels welcher das Peltier-Element mit einer entsprechenden Versorgungsspannung bzw. Versorgungsenergie angesprochen bzw. gesteuert werden kann. Die Steuereinheit 7 ist über eine Kommunikationsstrecke mit einer Auswerte- und Steuereinheit 13 verbunden, wobei als Kommunikationsstrecke eine Verbindungsleitung bzw. auch drahtlose Verbindung 11 verwendet werden kann, welche bereits zum Außenfühler 1 besteht und in einer aufzurüstenden Bestandsanlage vorhanden ist.

Die Ansteuerung des Peltier-Elements 9 über die Auswerte- und Steuereinheit 13 kann hierbei über Multiplex-, Modulationsverfahren oder ähnliche Verfahren zur Nutzung bereits bestehender Kommunikationsstrecken erfolgen, so dass in der Steuereinheit 7 in jedem Fall die Steuersignale 13 oder sogar die entsprechende Versorgungsenergie empfangen wird. Selbstverständlich ist es auch denkbar, dass nur die Steuersignale der Auswerte- und insbesondere Steuereinheit 13 in der Steuereinheit 7 bzw. Elektronik empfangen werden und entsprechend eine Versorgungsspannung bzw. Versorgungsenergie für das Peltier-Element 9 gesteuert bzw. geregelt wird, wobei diese Versorgungsspannung bereits an oder im Außenfühler anliegen kann, beispielsweise zur Versorgung des Thermoelements 3 bzw. dessen Empfangseinheit 5 oder zusätzlich an dieser Stelle beispielsweise von einem externen Stromnetz, Außensteckdose etc. eingebracht wird.

Obwohl, wie in Fig. 1 dargestellt, die Auswerte- und Steuereinheit 13 eine bauliche Einheit darstellt, ist es selbstverständlich auch denkbar, die Auswerteeinheit von der Steuereinheit zur Steuerung des Peltier-Elements 9 getrennt anzuordnen und zwischen Auswerte- und Steuereinheit eine Kommunikationsstrecke vorzusehen.

Die zentrale Steuereinheit 15 ist üblicherweise an oder in der Nähe eines bestehenden Wärme- oder Kälteerzeugers 16 angeordnet um diesen entsprechend zu steuern bzw. zu regeln. Der Wärme- oder Kälteerzeuger betreibt einen Kreislauf mit einem Vorlauf 17 und einem Rücklauf 21 wobei der Vorlauf 17 des darin befindlichen Kühl- oder Heizmediums üblicherweise durch eine Pumpe 19 gefördert wird. In Abhängigkeit der Vorlauftemperatur werden in den in der Zeichnung dargestellten ersten Raum 23 und zweiten Raum 25 befindliche Heiz- oder Kühlflächen 27 und 37 mit dem Heiz- oder Kühlmedium versorgt, wobei nach Abgabe von Wärme oder Kälte das Heiz- oder Kühlmedium über den Rücklauf 21 ablaufen kann und zurück zum Wärme- oder Kälteerzeuger 16 fließt. Im ersten Raum 23 befindet sich zur Regelung des Ventils 35 über einen Stellantrieb 33 über Leitung 29 ein erster Raumthermostat 31. Ebenso befindet sich im zweiten Raum 25 ein zweiter Thermostat 41, welcher über Leitung 39 und Stellantrieb 43 das Ventil 45 im Vorlaufanschluss der zweiten Heiz- oder Kühlfläche 37 entsprechend der gewünschten, eingestellten SollTemperatur regelt.

Für diese Bestandthermostate 31 und 41 ist erfindungsgemäß, wie gestrichelt dargestellt, eine nachzurüstende Kommunikationsstrecke 47 zur Auswerte- und Steuereinheit 13 vorgesehen, über welche erfasste Werte eines Raumes 23, 25 insbesondere an die Auswerteeinheit der Auswerte- und Steuereinheit 13 übertragen werden können. Als erfasste Werte können hierbei insbesondere die an einem Raumthermostat vom Benutzer eingestellte und damit gewünschte Solltemperatur übermittelt werden. Weiterhin können von den Raumerfassungseinrichtungen 31 und 41 auch die tatsächlichen Temperaturwerte eines Raumes sowie andere Werte, wie beispielsweise Steuersignale an die Stellantriebe 33, 43, tatsächliche Stellung der Ventile 35, 45 etc. übermittelt werden, aus welchen sich ebenfalls in der Auswerteeinheit 13 ein tatsächlich benötigter Momentan-Bedarf an Kühl- oder Wärmeenergie berechnen lässt.

Entspricht beispielsweise die Raumtemperatur in einem Raum 23, 25 der am Thermostat 31, 41 eingestellten gewünschten Solltemperatur, können diese Werte jeweils an die Auswerteeinheit 13 übermittelt werden. Liegt die Vorlauftemperatur höher oder wesentlich höher als die höchste gewünschte Solltemperatur, so könnte in diesem Fall die Vorlauftemperatur energetisch günstig abgesenkt werden, um Heizenergie und -kosten zu sparen. Alternativ hierzu könnte bei übermittelten Werten der Stellantriebe 33 und 43 und/oder Stellsignalen der Ventile 35 und 45 mit dem Wert "geschlossen" oder "nahezu geschlossen" oder auch "abdrehend" (hinsichtlich einer vorherigen Stellung) ausgewertet werden und zu dem Schluss führen, dass die Vorlauftemperatur abgesenkt werden kann, bis Werte hinsichtlich eines Öffnens der Ventile vorliegen, also eine höhere Ist-Temperatur in den Räumen 23, 25 gewünscht wird und entsprechend die Vorlauftemperatur wieder erhöht wird. Selbstverständlich ist es auch denkbar, den tatsächlichen Momentan-Bedarf an Heiz- oder Kühlenergie über andere Werte in dem Kühl- oder Heizregelkreis zu erfassen, welche Rückschlüsse auf eine gewünschte Raumtemperatur und eine tatsächliche Raumtemperatur ziehen lassen.

Im Heizfalle, also des Betriebs einer Heizanlage, kann bei Vorliegen bzw. Überschreiten eines tatsächlich ermittelten Momentan-Bedarfs durch die aktuell vorherrschende Vorlauftemperatur diese Vorlauftemperatur erfindungsgemäß durch eine Beeinflussung des bestehenden Außenfühlers abgesenkt werden. Hierbei wird von der Auswerte- und Steuereinheit ein entsprechendes Signal über die Kommunikationsstrecke 11 an das Peltier-Element 9 gesandt um dieses Peltier-Element 9 zu einer entsprechenden Erwärmung zu veranlassen. Da die dem Thermoelement 3 zugewandte Fläche des Peltier-Elements 9 erwärmt wird, wird dem Thermoelement 3 eine erhöhte Außentemperatur vorgetäuscht, woraufhin diese erhöhte Außentemperatur in Bestandsanlagen durch Übermittlung über Verbindungsleitung oder Kommunikationsstrecke zur zentralen Steuereinheit 15 zu einer Absenkung der Vorlauftemperatur bzw. zu einer anderen Stelle der vorgegebenen Heizcharakteristik-Kurve führt. Im einfachsten Fall, bei welchem dem Außenfühler nur eine erhöhte Außentemperatur vorgetäuscht werden soll, könnte, statt eines Peltier-Elements 9, als Offseteinrichtung auch ein einfaches Heizelement angeordnet sein.

Die Kommunikationsstrecke 47 zwischen Raumerfassungseinrichtungen 31 und 41 und der Auswerte- und Steuereinheit 13 kann als Erweiterung von vorhandenen Bestandsraumthermostaten beispielsweise ohne zusätzliche Kabelverlegearbeiten und damit eventuell verbundenen Stemmarbeiten im Gebäude erfolgen. Beispielsweise ist es denkbar, kodierte Signale über eine vorhandene Elektroinstallation an die Auswerte- und Steuereinrichtung 13 zu übertragen, wobei an den Raumtemperaturerfassungseinrichtungen und der Auswerteeinheit sich in diesem Falle ein entsprechendes Interface für die Kodierung und Dekodierung der der Netzfrequenz aufmodulierten Signale angeordnet sind. Selbstverständlich ist es auch denkbar, die Kommunikationsstrecke 47 drahtlos als Funkstrecke zu realisieren.

Die Kommunikationsstrecke zwischen Auswerte- und Steuereinheit 13 und Peltier-Element 9 bzw. Steuereinheit hierfür kann beispielsweise durch Einschleifen der Auswerte- und Steuereinheit 13 in die bestehende Verbindungsleitung zwischen zentraler Steuereinheit 15 und bestehendem Außenfühler 1 realisiert werden. Hierbei wird die bisherige Verbindungsleitung selbstverständlich weiterhin für die Messung des Thermoelements 3, insbesondere Widerstandsmessung, benutzt, wobei nunmehr zusätzlich eine Signal- oder gar Spannungsversorgung für das Peltier-Element bzw. dessen Steuereinheit 7 erfolgt. Möglich wäre hier beispielsweise eine abwechselnde Nutzung zur Erfassung der Außentemperatur und zur Spannungsversorgung des Peltier-Elements, beispielsweise im Sekundentakt oder pulsweitenmoduliert. Zum zentralen Regler 15 des Wärme- oder Kälteerzeugers 16 kann der erfasste Wert, insbesondere Widerstandswert, des Thermoelements in den Taktpausen, die der Spannungsversorgung des Peltier-Elements dienen, durch eine Elektronik konstant gehalten und "geglättet" werden. Am Peltier-Element wiederum könnte ein Energiespeicher die Taktpausen, in denen die Widerstandsmessung des Außenfühlers erfolgt, überbrücken. Damit entfällt vorteilhafterweise auch für diese Verbindung das Nachinstallieren neuer Kabel, was im Sanierungsfall ein gewichtiges Argument darstellt.

Als Energiespeicher am Peltier-Element 9 eignen sich elektrische Speicher (Akkumulatoren, Kondensatoren) zur Versorgung des Peltier-Elements in den Taktpausen als auch thermische Speicher (z.B. Magnesit) zur Glättung des Temperaturverlaufs im Gehäuse des Außenfühlers gleichermaßen. Ebenso ist zur Versorgung des Peltier-Elements eine der Gleichspannung der Außentemperaturerfassung überlagerte Wechselspannung mit entsprechenden elektrischen Filtern denkbar.

In stark vereinfachter Form, wenn ausschließlich im Heizfalle die Aufgabenstellung darin besteht, für das Gebäude von den Raumerfassungseinrichtungen einen niedrigen Bedarf an Heizwärme zu detektieren, kann das Peltier-Element auch durch einen einfachen Heizwiderstand ersetzt werden. Damit wird erreicht, dass die innerhalb des Gehäuses des Außenfühlers befindliche Seite warm wird und den Außenfühler je nach Abweichung zwischen Wärmebedarf und Wärmeangebot eine höhere Außentemperatur fühlen lässt, als tatsächlich herrscht und somit die Vorlauftemperatur und damit gleichbedeutend das Wärmeangebot verringert und an den tatsächlichen Wärmebedarf anpasst.

Besonders vorteilhaft ist die vorstehend erläuterte Nachrüstbarkeit von bestehenden Heiz- oder Kühlanlagen, um diese nachträglich mit einer vorher nicht vorhandenen bedarfsabhängigen Regelung auszustatten. Beispielsweise ist es für alle Ausgestaltungen der Erfindung auch denkbar, über das Gehäuse eines vorhandenen Außenfühlers 1 einer bestehenden Heiz- oder Kühlanlage bzw. Anlage zum Klimatisieren eines Objekts eine zweites Gehäuse darüber anzuordnen (aufstülpen, überschieben, etc.) in oder an welchem sich im Bereich des Thermoelements des Außenfühlers die Offset-Einrichtung befindet.

## Patentansprüche

1. Verfahren zum bedarfsabhängigen Regeln einer Heiz- und/oder Kühlanlage für ein wenigstens eine Nutzungseinheit (23, 25) umfassendes Objekt, **dadurch gekennzeichnet, dass**
a) aus einem Heiz- und/oder Kühlkreis ein Momentan-Bedarf für eine Heiz- oder Kühlenergie mittels einer Auswerteeinheit (13) ermittelt wird,
b) im Falle eines Abweichens des Momentan-Bedarfs an Heiz- oder Kühlenergie von einem aktuellen Angebot an Heiz- oder Kühlenergie, an einem zentralen Temperatursensor (1) für die Außen- oder Umgebungstemperatur mittels einer Offset-Einrichtung (9) in Abhängigkeit der Abweichung über eine Steuereinheit (13) ein entsprechender Offset eingestellt wird,
c) um die Heiz- und/oder Kühlenergie der Heiz- und/oder Kühlanlage entsprechend der Abweichung zu regeln und
d) die Energieversorgung und/oder Steuerung der Offset-Einrichtung (9) über eine für den zentralen Temperatursensor (1) existierende erste Kommunikationsstrecke (11) erfolgt.

2. Verfahren nach Anspruch 1, **dadurch gekennzeichnet, dass** als Offset-Einrichtung (9) ein Peltier-Element verwendet wird.

3. Verfahren nach Anspruch 1 oder 2, **dadurch gekennzeichnet, dass** der Momentan-Bedarf durch wenigstens einen Wert eines dezentralen Thermostats (31, 41) für wenigstens eine Nutzungseinheit (23, 25), welcher an die Auswerteeinheit (13) über eine weitere Kommunikationsstrecke (47) übermittelt wird, erfasst wird.

4. Verfahren nach Anspruch 3, **dadurch gekennzeichnet, dass** als weitere Kommunikationsstrecke (47) zwischen Auswerteeinheit (13) und dezentralem Thermostat (31, 41) eine bereits vorhandene Kommunikationsstrecke verwendet wird.

5. Offset-Einrichtung (9) mit Steuer- und/oder Auswerteeinheit (13) für einen zentralen Temperatursensors (1) für die Außen- oder Umgebungstemperatur zur Durchführung eines Verfahrens nach einem der vorhergehenden Ansprüche, wobei mittels der Offset-Einrichtung (9) an dem zentralen Temperatursensor (1) im Falle einer von der Steuer- und/oder Auswerteeinheit (13) ermittelten Abweichung eines Momentan-Bedarfs an Heiz- oder Kühlenergie von einem aktuellen Angebot an Heiz- oder Kühlenergie ein entsprechender Offset eingestellt werden kann.

6. Offset-Einrichtung nach Anspruch 5, **dadurch gekennzeichnet, dass** die Offset-Einrichtung (9) als ein Peltier-Element ausgebildet ist.

## Claims

1. Method for requirement-dependent regulation of a heating and/or cooling system for an object comprising at least one usage unit (23, 25),
**characterised in that**
a) an instantaneous requirement for heating or cooling energy is determined from a heating and/or cooling circuit by means of an evaluation unit (13),
b) in the case of a deviation of the instantaneous requirement for heating or cooling energy from a current offer of heating or cooling energy, a corresponding offset is set at a central temperature sensor (1) for the outside or ambient temperature by means of an offset device (9) as a function of the deviation by way of a control unit (13),
c) in order to regulate the heating and/or cooling energy of the heating and/or cooling system in accordance with the deviation, and
d) the energy supply and/or control of the offset device (9) are/is effected by way of a first communication path (11) that exists for the central temperature sensor (9).

2. Method according to claim 1, **characterised in that** a Peltier element is used as the offset device (9).

3. Method according to claim 1 or 2, **characterised in that** the instantaneous requirement is detected by means of at least one value of a decentralized thermostat (31, 41) for at least one usage unit (23, 25) that is conveyed to the evaluation unit (13) by way of a further communication path (47).

4. Method according to claim 3, **characterised in that** a communication path that is already present is used as the further communication path (47) between the evaluation unit (13) and the decentralized thermostat (31, 41).

5. An offset device (9) having a control and/or evaluation unit (13) for a central temperature sensor (1) for the outside or ambient temperature for carrying out a method according to one of the preceding claims, wherein a corresponding offset can be set by means of the offset device (9) at the central temperature sensor (1) in the case of a deviation of an instantaneous requirement for heating or cooling energy, determined by the control and/or evaluation unit (13), from a current offer of heating or cooling energy.

6. An offset device according to claim 5, **characterised in that** the offset device (9) is formed as a Peltier element.

## Revendications

1. Procédé permettant de régler en fonction des besoins une installation de chauffage et/ou de refroidissement pour un objet comprenant au moins une unité d'utilisation (23, 25), **caractérisé en ce que**
a) à partir d'un circuit de chauffage et/ou de refroidissement, un besoin provisoire d'énergie de chauffage ou de refroidissement est déterminé au moyen d'une unité d'analyse (13) ;
b) en cas d'écart entre le besoin provisoire d'énergie de chauffage ou de refroidissement et une énergie de chauffage ou de refroidissement disponible à ce moment, un décalage correspondant est réglé à un capteur de température central (1) pour la température extérieure ou ambiante au moyen d'un dispositif de décalage (9) en fonction de l'écart par le biais d'une unité de commande (13) ;
c) afin de régler l'énergie de chauffage et/ou de refroidissement de l'installation de chauffage et/ou de refroidissement en fonction de l'écart ; et
d) l'alimentation en énergie et/ou la commande du dispositif de décalage (9) est réalisée par le biais d'une première ligne de communication (11) existant pour le capteur de température central (9).

2. Procédé selon la revendication 1, **caractérisé en ce qu'**un élément Peltier est utilisé comme dispositif de décalage (9).

3. Procédé selon la revendication 1 ou 2, **caractérisé en ce que** le besoin provisoire est calculé à l'aide d'au moins une valeur d'un thermostat décentralisé (31, 41) pour au moins une unité d'utilisation (23, 25), laquelle valeur est transmise à l'unité d'analyse (13) par le biais d'une autre ligne de communication (47).

4. Procédé selon la revendication 3, **caractérisé en ce qu'**une ligne de communication qui existe déjà est utilisée comme autre ligne de communication (47) entre l'unité d'analyse (13) et le thermostat décentralisé (31, 41).

5. Dispositif de décalage (9) comportant une unité de commande et/ou d'analyse (13) pour un capteur de température central (1) destiné à la température extérieure ou ambiante aux fins de la mise en oeuvre d'un procédé selon l'une quelconque des revendications précédentes, dans le cas où l'unité de commande et/ou d'analyse (13) détectant un écart entre un besoin provisoire d'énergie de chauffage ou de refroidissement et une énergie de chauffage ou de refroidissement disponible à ce moment, un décalage correspondant peut être réglé au niveau du capteur de température central (1) au moyen du dispositif de décalage (9).

6. Dispositif de décalage selon la revendication 5, **caractérisé en ce que** le dispositif de décalage (9) est conçu comme un élément Peltier.
